# EUROPEAN PATENT APPLICATION

(11) **EP 4 807 433 A1**
(43) Date of publication of application: **16.09.2026**
(21) Application number: 24888655.8
(22) Date of filing: 01.11.2024
(51) Int. Cl.: G02B 27/28, G02B 6/27, G02F 1/09

(54) **OPTICAL ISOLATOR AND LIGHT TRANSMISSION CIRCUIT MODULE**

(30) Priority: 08.11.2023 JP 2023191101
(71) Applicant: SHIN-ETSU CHEMICAL CO., LTD., Tokyo 100-0005 (JP)
(72) Inventor: WATANABE, Toshiaki, Annaka-shi, Gunma 379-0195 (JP)
(74) Representative: Schicker, Silvia
(86) International application number: PCT/JP2024/039078
(87) International publication number: WO 2025/100359

(57) **Abstract**

The present invention is an optical isolator having 2 or more light paths, the optical isolator including isolator chips provided in each of the light paths, each of the isolator chips including one or more polarizers and one or more Faraday rotators bonded and integrated with each other, in which the isolator chips are securely bonded to a substrate, the substrate is a transparent substrate, and light transmitting along each of the light paths is transmitted through the corresponding isolator chip and the transparent substrate. This provides an optical isolator to be inserted into a laser module having a plurality of light paths, in which the optical isolator is configured to simplify the assembly steps of isolator chips without arranging the isolator chips in spaces other than the light-transmissive portion.

## Description

### TECHNICAL FIELD

The present invention relates to an optical isolator and a light transmitting circuit module.

### BACKGROUND ART

In optical communication and optical measurement apparatuses, laser oscillation becomes unstable when light emitted from a laser source is reflected by a surface of a member disposed along a transmission line and returns to the laser source. In order to block such back-reflected light, optical isolators are used, in which a Faraday rotator is used to rotate a polarization plane in a non-reciprocal manner (e.g., Patent Document 1).

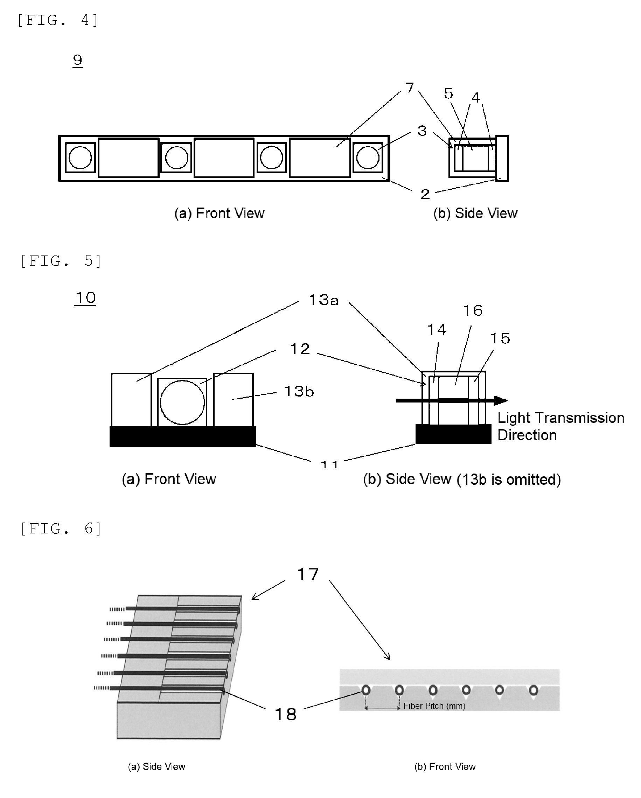

FIG. 5 shows an example of a configuration and an image of an arrangement of a typical single-stage optical isolator. As shown in FIG. 5 (a), a typical single-stage optical isolator 10 includes an isolator chip 12 and permanent magnets 13a and 13b that are securely bonded to a holding housing 11, and the permanent magnets 13a and 13b are arranged on both sides of the isolator chip 12. As shown in FIG. 5 (b), the isolator chip 12 is configured with a first polarizer 14, a Faraday rotator 16, and a second polarizer 15 that are bonded and integrated in this order in advance via an adhesive. In this configuration, light is transmitted through the isolator chip 12 in a direction parallel to the holding housing 11.

### CITATION LIST

### PATENT LITERATURE

Patent Document 1: JP 3973975 B2

### SUMMARY OF INVENTION

### TECHNICAL PROBLEM

In laser modules of optical communications, a plurality of light paths has been formed from the viewpoint of space-saving and integration of optical circuits. When inserting isolators into these light paths, it has been required to arrange one isolator chip on each light path for a component, such as an optical fiber array, or to employ an isolator chip with a shape covering the entire cross-section of the light paths in the optical fiber array.

In the former case, mounting isolator chips and magnets while retaining a complex-shaped optical fiber array requires complicated adjustment of mounting positions. In addition, multiple adhesive curing processes are required while taking into account of pistoning phenomena of the fibers or the like, thereby increasing the number of assembly steps.

In the latter case, the assembly steps are decreased compared to the former case; however, materials for forming belt-shaped isolator chips are placed in spaces other than light-transmissive portions, resulting in increased material costs. Moreover, in a configuration in which a magnet arrangement is required, the magnets are required to be arranged above and below the belt-shaped isolator chip, which is not preferable in view of space-saving.

The present invention has been made to solve the above-described problem. An object of the present invention is to provide an optical isolator to be inserted into a laser module having a plurality of light paths, in which the optical isolator is configured to simplify the assembly steps of isolator chips without arranging the isolator chips in spaces other than the light-transmissive portion.

### SOLUTION TO PROBLEM

To achieve the object, the present invention provides an optical isolator having 2 or more light paths, the optical isolator comprising:
isolator chips provided in each of the light paths, each of the isolator chips including one or more polarizers and one or more Faraday rotators bonded and integrated with each other, wherein
the isolator chips are securely bonded to a substrate,
the substrate is a transparent substrate, and
light transmitting along each of the light paths is transmitted through the corresponding isolator chip and the transparent substrate.

With such an optical isolator, without degrading optical characteristics of the optical isolator, mounting positions of the isolator chips can be adjusted with high accuracy for a component requiring a plurality of isolator chips, and due to the mounting being completed in a single step, the assembly steps can be simplified. Furthermore, it is not required to arrange the isolator chips in spaces other than light-transmissive portions, thereby contributing to cost reduction.

In this case, one or more magnets can be further securely bonded to the substrate to apply a magnetic field to the isolator chips.

Accordingly, even in the case of the isolator chips configured to require the magnets, the mounting positions of the isolator chips can be adjusted with high accuracy and can be completed in a single step. Thus, the assembly steps can be simplified.

In this case, when the number of the isolator chips is n (n being a natural number of 2 or more), the number of the magnets can be n-1.

Accordingly, even in the case of the isolator chips configured to require magnets, space-saving of the isolator chips can be realized.

In this case, a light transmitting circuit module can be provided, wherein
the optical isolator described above is attached to a light transmitting circuit via the transparent substrate.

Accordingly, the light transmitting circuit module that is low in cost and excellent in space-saving can be provided.

### ADVANTAGEOUS EFFECTS OF INVENTION

As described above, according to the inventive optical isolator, without degrading the optical characteristics of the optical isolator, the mounting positions of the isolator chips can be adjusted with high accuracy for a component requiring a plurality of isolator chips, and due to the mounting being completed in a single step, the assembly steps can be simplified. Furthermore, it is not required to arrange the isolator chips in spaces other than light-transmissive portions, thereby contributing to cost reduction.

### BRIEF DESCRIPTION OF DRAWINGS

[FIG. 1] is an example of an optical isolator (with 2 light paths) according to the present invention.
[FIG. 2] is an example of an optical isolator (with 4 light paths) according to the present invention.
[FIG. 3] is an example of an optical isolator (with a magnet and 2 light paths) according to the present invention.
[FIG. 4] is an example of an optical isolator (with magnets and 4 light paths) according to the present invention.
[FIG. 5] is an example of a typical optical isolator.
[FIG. 6] is an image diagram of an optical fiber array.
[FIG. 7] is a cross-sectional view in which an optical isolator according to the present invention is securely bonded to an optical fiber.

### DESCRIPTION OF EMBODIMENTS

Hereinafter, the present invention will be described in detail. However, the present invention is not limited thereto.

As described above, for an optical isolator to be inserted into a laser module having a plurality of light paths, it has been desired that the optical isolator is configured to simplify the assembly steps of isolator chips without arranging the isolator chips in spaces other than the light-transmissive portion.

To solve the above problem, the present inventor conducted extensive studies and conceived that by providing a structure configured such that a plurality of isolator chips is arranged and fixed for respective light paths in advance on a transparent substrate, and light transmitting along each of the light path is transmitted through the corresponding isolator chip and the transparent substrate, mounting positions of the isolator chips can be adjusted with high accuracy for a component requiring a plurality of isolator chips (optical fiber array) without degrading optical characteristics of the optical isolator. In addition, due to the mounting being completed in a single step, the assembly steps can be simplified. Furthermore, it is not required to arrange the isolator chips in spaces other than light-transmissive portions, thereby contributing to a reduction of production costs. Based on this conception, the present invention has been completed.

That is, the present invention is an optical isolator having 2 or more light paths, the optical isolator including isolator chips provided in each of the light paths, each of the isolator chips including one or more polarizers and one or more Faraday rotators bonded and integrated with each other, in which the isolator chips are securely bonded to a substrate, the substrate is a transparent substrate, and light transmitting along each of the light paths is transmitted through the corresponding isolator chip and the transparent substrate.

Note that the upper limit of the number of light paths is not particularly limited, but may be, for example, 100 or fewer. In addition, the upper limit of the number of polarizers and Faraday rotators is not particularly limited, but may be, for example, 16 or fewer, respectively.

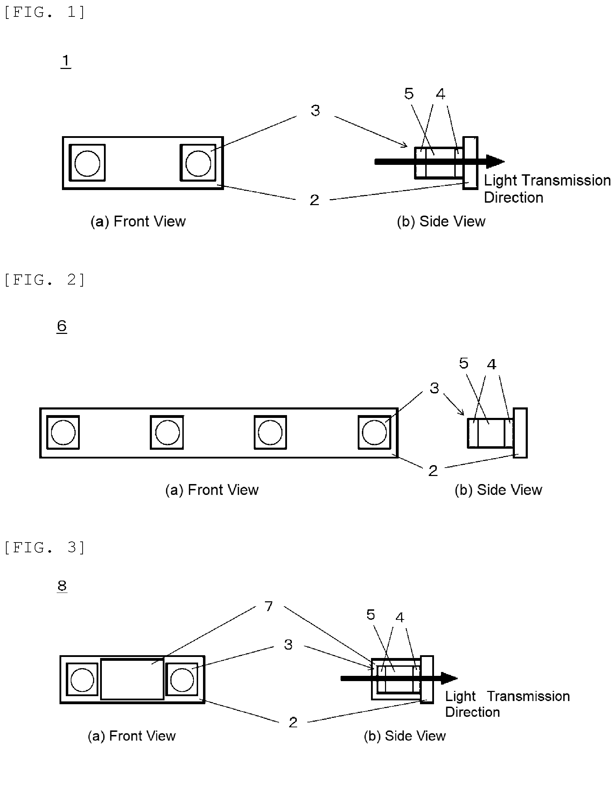

Hereinafter, an example of an optical isolator according to an embodiment of the present invention will be described with reference to FIGs. 1 to 4.

### [Optical Isolator]

The inventive optical isolator is an optical isolator having 2 or more light paths. In addition, the optical isolator includes isolator chips that are provided in each of the light paths, in which each of the isolator chips includes one or more polarizers and one or more Faraday rotators bonded and integrated with each other, and the isolator chips are securely bonded to a substrate. Moreover, the substrate is a transparent substrate, and the optical isolator is configured to transmit light along each of the light paths through the corresponding isolator chip and the transparent substrate.

In other words, the inventive optical isolator includes a plurality of light paths, and a plurality of isolator chips are bonded on one transparent substrate; moreover, the isolator chips and the transparent substrate are provided in the corresponding light paths.

FIG. 1 shows an example of an optical isolator having 2 light paths. As shown in FIG. 1 (a), the inventive optical isolator 1 (with 2 light paths) is configured to include isolator chips 3 securely bonded onto a transparent substrate 2, and light transmitting along each of the light paths is transmitted through the corresponding isolator chip 3 and the transparent substrate 2. The isolator chip 3 is composed of one or more polarizers 4 and one or more Faraday rotators 5 that are bonded and integrated with each other.

According to such an optical isolator, without degrading the optical characteristics of the optical isolator, the mounting positions of the isolator chips can be adjusted with high accuracy for a component requiring a plurality of isolator chips (optical fiber array), and due to the mounting being completed in a single step, the assembly steps can be simplified. Furthermore, it is not required to arrange the isolator chips in spaces other than light-transmissive portions, thereby contributing to a reduction of production costs.

The transparent substrate is not particularly limited as long as light used for the optical fiber transmits therethrough. A material having a coefficient of thermal expansion close to that of the optical fiber (with a coefficient of thermal expansion: about 5.8×10⁻⁶/°C to 6.2×10⁻⁶/°C) or that of a glass base material for fixing the optical fiber array, is preferable. For example, borosilicate glass or quartz glass can be used suitably.

The polarizer or the Faraday rotator is not particularly limited, and known polarizers and known Faraday rotators can be used. For example, (TbEuBi)₃(FeGa)₅O₁₂ or (GdBi)₃(FeGa)₅O₁₂ can be used for the Faraday rotator.

Note that FIG. 2 shows an example of the inventive optical isolator 6 having 4 light paths.

When a latching-type Faraday rotator that does not require a magnet is used, it is not required to provide a magnet. However, when a magnet for applying a magnetic field to the isolator is used, one or more magnets 7 can be securely bonded on the transparent substrate 2, as shown in FIGs. 3 and 4. In this case, when the number of the isolator chips is n, the number of the magnets can be n-1. Accordingly, even when using the isolator chip configured to require the magnet, space-saving can be realized.

Note that the upper limit of n is not particularly limited, but may be, for example, 100 or fewer.

Note that FIG. 3 shows an optical isolator 8 having 2 light paths (with a magnet), and FIG. 4 shows an optical isolator 9 having 4 light paths (with magnets).

FIG. 6 shows a configuration of an optical fiber array. As shown in FIG. 6, optical fibers 18 are securely bonded to an optical fiber array 17 with a predetermined pitch therebetween, and an end surface of the optical fiber is processed by polishing. A ceramic material or a glass material having a small coefficient of thermal expansion is used for the array.

When the isolator chips are arranged and assembled on the light paths of the optical fiber array, it is required to mount the chips after attaching a mounting positioning jig or the like to the optical fiber array to secure chip mounting position accuracy, while taking care not to damage the optical fibers extending from the opposite side of the array.

Furthermore, when the magnet is required, in order to avoid strain interference caused by an adhesive interposed between the chip and the magnet, it is required to mount the magnet after mounting the chip, or to mount the chip after mounting the magnet. Subsequently, in order to impart a magnetic force to the magnet, the entire array is required to be loaded into a magnetizer, and extreme care is required to prevent fiber breakage and the like.

When a latching-type Faraday rotator that does not require a magnet is used, it is not required to mount the magnet; however, a plurality of steps of attaching the isolator chips to the array is required, as described above. In addition, it may also be required to load the entire array into the magnetizer, as in a product employing a magnet to impart an isolator function, and even in such a case, extreme care is required to prevent fiber breakage and the like, as described above.

In the present invention, by employing the transparent substrate to which a plurality of the isolator chips is securely bonded in advance, only one adhesion and fixing of the optical isolator to the optical fiber array is required, thereby simplifying the production steps. Moreover, it is not required to arrange the isolator chips in spaces other than light-transmissive portions, thereby contributing to cost savings. Even when the magnet is required, by producing the optical isolator to which the isolator chips and the magnet are securely bonded, and the magnetic force is imparted by the magnetizer, the simplification of production steps, space-saving, and cost savings are achieved in a similar manner.

When the isolator chip, configured to require the magnet, has a shape to cover the entire cross-section of the light paths of the optical fiber array, it is required to mount the magnets above and below the isolator chip, thereby requiring the mounting spaces in the upper and lower directions of the isolator chip. However, in the inventive optical isolator, the magnet can be mounted between the isolator chips, and thus, space-saving can be realized.

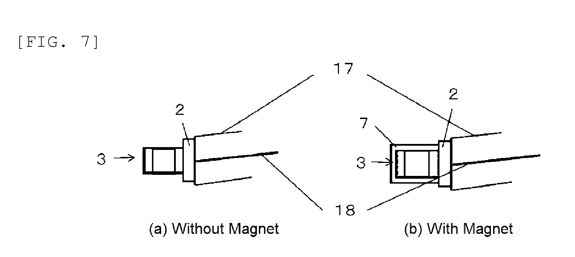

The present invention also provides a light transmitting circuit module, in which the optical isolator described above is attached to a light transmitting circuit via the transparent substrate. Accordingly, the light transmitting circuit module that is low in cost and excellent in space-saving can be obtained. For example, using an optical fiber array 17 shown in FIG. 6, which includes a light transmitting circuit, the optical isolator can be attached to the optical fiber array 17 so as to correspond to optical fibers 18 of the optical fiber array 17, as shown in FIGs. 7 (a) and (b), in which the optical isolator is configured such that the isolator chips 3 are arranged on the transparent substrate 2 at substantially the same intervals as the fiber pitch, and light transmits through the respective isolator chips 3 and the transparent substrate 2.

### EXAMPLES

### (Example)

In this Example, a quartz glass plate (thickness of 0.2 mm) having a coefficient of thermal expansion of 5.5×10⁻⁶/°C was used.

A planar glass polarizer (Polarcor manufactured by Corning Incorporated) in which Ag particles were dispersed and oriented was used as a polarizer, and (TbEuBi)₃(FeGa)₅O₁₂ was used for a Faraday rotator. An AR coat for air of 1310 nm was applied on glass surfaces of a first and a second polarizers (width of 11 mm, thickness of 0.2 mm, extinction performance of 52 dB). An anti-epoxy coat was applied to both surfaces of a 45.0-degree Faraday rotator (width of 11 mm, thickness of 0.36 mm) for 1310 nm, and the Faraday rotator was bonded with AR coat-free surfaces of the first and the second polarizers via epoxy adhesive. The first polarizer and the second polarizer were securely bonded such that the first and second polarizer had a relative angle of 45.0 degrees. Subsequently, the resulting isolator chip was cut and processed to have a width of 0.6 mm.

A product, such as an optical fiber array 17 shown in FIG. 6, including 4 optical fibers 18, having a fiber spacing of 2.0 mm, an overall width of 8.0 mm, and an overall height of 1.5 mm, was provided. An optical isolator to be used for this optical fiber array was produced.

As a transparent substrate, a quartz glass cut and processed to have a width of 8.0 mm and a height of 1.5 mm was provided. The isolator chips were securely bonded to a surface thereof using an epoxy adhesive. At that time, positioning adjustment was performed such that, when the quartz glass substrate was attached to the array, each of the isolator chips was arranged on an extension of the respective fiber positions.

When an isolator chip using a latching-type Faraday rotator that does not require a magnet is used, production of the optical isolator is achieved in such a simple way as described above.

Next, 3 permanent magnets (height of 0.8 mm, width of 1.2 mm, and length in light path direction of 1.0 mm) were securely bonded between the isolator chips using an epoxy adhesive (see FIG. 4). Subsequently, the quartz glass substrate, mounted with the isolator chips and the magnets thereon, was loaded into a magnetizer to impart a magnetic function. In this Example, the performance of the isolator chip can be confirmed at this stage.

With the optical isolator having a structure of this Example, it is possible to prevent bonding strain generated during bonding between the optical fiber array and the isolator chips from affecting optical characteristics by interposing the transparent substrate between the optical fiber array and the isolator chips.

Finally, the optical isolator and the optical fiber array were securely bonded using an epoxy adhesive while matching dimensions therebetween. The optical characteristics of the isolator were a forward insertion loss of 0.12 dB and a backward insertion loss of 45 dB at a wavelength of 1310 nm. Because the transparent substrate was used, the attachment of the optical isolator to the optical fiber array was also easily fixed using a UV-curable adhesive. FIG. 7 shows a side view of the optical isolator after the above-described bonding.

### (Comparative Example)

When a belt-shaped isolator chip that covers the entire cross-section of light paths of an optical fiber array is used, the isolator chip can be attached to the optical fiber array in a single process. However, when a fiber spacing is the same as in Example, the isolator chip having a dimension of 0.6×6.6 mm is required. It was found that, as compared with a case in which 4 isolator chips each having dimensions of 0.6×0.6 mm were used, the material usage area was increased to about 2.8 times, and therefore the material cost of the optical isolator, being composed of an expensive material, was increased. Moreover, when magnets are used, the magnets are required to be mounted above and below the isolator chip. Accordingly, it is required to provide a substrate having a height further extended from that of the above-described substrate (1.5 mm). When an isolator chip using a latching-type Faraday rotator that does not need a magnet is used, production of an optical isolator is achieved by using the substrate having the dimensions described above. However, the same issue of increased material cost will be raised by providing a belt-shaped material.

As described above, according to the Example of the present invention, highly accurate adjustment of mounting positions of the isolator chips and the mounting thereof in a single mounting step were successfully achieved without degrading the optical characteristics of the optical isolator, thereby enabling the production of the optical isolator that was low in cost and excellent in space-saving properties.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. An optical isolator having 2 or more light paths, the optical isolator comprising:
isolator chips provided in each of the light paths, each of the isolator chips including one or more polarizers and one or more Faraday rotators bonded and integrated with each other, wherein
the isolator chips are securely bonded to a substrate,
the substrate is a transparent substrate, and
light transmitting along each of the light paths is transmitted through the corresponding isolator chip and the transparent substrate.

2. The optical isolator according to claim 1, wherein
one or more magnets are further securely bonded to the substrate to apply a magnetic field to the isolator chips.

3. The optical isolator according to claim 2, wherein
when a number of the isolator chips is n (n being a natural number of 2 or more), a number of the magnets is n-1.

4. A light transmitting circuit module, wherein
the optical isolator according to any one of claims 1 to 3 is attached to a light transmitting circuit via the transparent substrate.
